# FASCICULE DE BREVET EUROPEEN

(11) **EP 0 495 323 B1**
(45) Date de publication et mention de la délivrance du brevet: **28.12.1994**
(21) Numéro de dépôt: 91403069.7
(22) Date de dépôt: 15.11.1991
(51) Int. Cl.: G01P 3/44

(54) **Roulement à capteur d'informations**
Wälzlager mit Messaufnehmer
Roller bearing with sensor

(30) Priorité: 15.01.1991 FR 9100358
(43) Date de publication de la demande: 22.07.1992
(73) Titulaire: SNR ROULEMENTS, F-74010 Annecy (FR)
(72) Inventeur: Faye, Bradley D., Goshen, CT 06757 (US); Hilby, James A., Watertown, CT 06795 (US); Hajzler, Christian, F-74000 Annecy (FR)
(74) Mandataire: Ernst-Schonberg, Michel

(56) Documents cités:
- EP-A- 0 376 771
- EP-A- 0 387 459
- FR-A- 2 599 794
- GB-A- 1 604 862

## Description

L'invention concerne un roulement à capteur d'informations, dans lequel une bague fixe porte un moyen capteur d'informations et une bague tournante porte un moyen codeur et qui possède des chemins de roulement de réception de corps roulants au contact desdites bagues et une garniture d'étanchéité interposée entre ces mêmes bagues.

La publication FR-A-2599794 décrit un roulement dans lequel le moyen capteur est solidaire d'une monture rapportée sur la bague fixe.

Sur les roulements de ce type, la fonction étanchéité ne peut pas être conservée en l'absence du moyen capteur. Il en résulte que le roulement ne peut plus être utilisé sans celui-ci. Cette manière de procéder ne permet plus l'emploi de certains roulements en l'absence du moyen capteur et ne permet pas le montage de capteurs sur des roulements existants.

Pour remédier à cet inconvénient on a déjà proposé de monter sur les roulements des moyens capteurs intégrés à une garniture d'étanchéité spéciale dont l'emploi s'impose à la place d'une garniture conventionnelle chaque fois que le roulement doit être équipé d'un moyen capteur sans modification d'éléments structurels du roulement.

L'invention a pour objet un roulement étanche à capteur d'informations dans lequel le capteur est monté de manière amovible à l'extérieur du roulement dans le but de préserver l'intégrité du roulement et de son étanchéité en présence ou en l'absence du dispositif capteur.
L'invention a également pour objet un moyen capteur amovible susceptible d'être remplacé ou récupéré lors d'un changement de roulement.

Conformément à l'invention le moyen capteur est intégré à un support axialement adjacent à la garniture d'étanchéité et accolé à la face latérale de la bague fixe et porte un collier de fixation de diamètre sensiblement égal au diamètre extérieur d'un élément fixe de la garniture d'étanchéité.

Selon un mode de réalisation de l'invention le diamètre intérieur de deux branches élastiques du collier est sensiblement égal à une portée de montage de la garniture d'étanchéité.

Selon une autre variante de réalisation de l'invention la surface intérieure du collier constitue une surface d'étanchéité coopérant avec une partie fonctionnelle de la garniture d'étanchéité.

Selon un autre mode de réalisation de l'invention la garniture d'étanchéité possède une portée de montage du collier.

D'autres caractéristiques et avantages du roulement apparaîtront à la lecture de la description d'exemples de réalisation de celui-ci faite en référence au dessin annexé dans lequel :

La figure 1 est une vue en coupe partielle du roulement sur le côté duquel est monté le moyen capteur d'informations intégré à son support.

La figure 2 est une vue en perspective du support du moyen capteur.

La figure 3 est une vue en coupe agrandie d'une partie fonctionnelle du roulement représenté à la figure 1.

La figure 4 est une vue en coupe partielle du roulement illustrant une première variante de montage du moyen capteur.

La figure 5 est une vue en coupe partielle d'un roulement illustrant une deuxième variante de montage du moyen capteur.

La figure 6 est une vue en coupe partielle d'un roulement à flasque de fixation illustrant une troisième variante de montage du moyen capteur.

Dans la description des différents exemples de réalisation de l'invention on désignera par les mêmes références les organes ou groupe d'organes correspondants du roulement.

Un roulement tel que représenté aux différentes figures est constitué par une bague intérieure 1 supposée tournante et une bague extérieure 2 supposée fixe en une ou deux parties. Des chemins de roulement au contact des bagues 1 et 2 reçoivent des corps roulants 3 montés dans une cage 4, isolés de l'extérieur du roulement par une garniture d'étanchéité 5 interposée entre les bagues 1 et 2.

Un moyen capteur d'informations 6 tel qu'un capteur de champ magnétique est constitué par un support 7 dans lequel est enfermé l'ensemble capteur et ses circuits électroniques, un câble d'alimentation 8 et un collier de fixation 9. Le support 7 est axialement adjacent à la garniture d'étanchéité 5 et est accolé à la face latérale de la bague fixe 2.

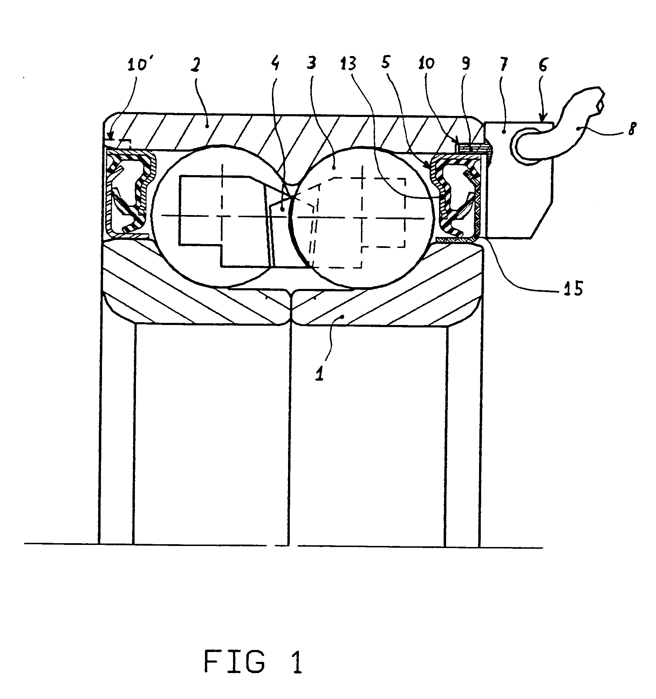

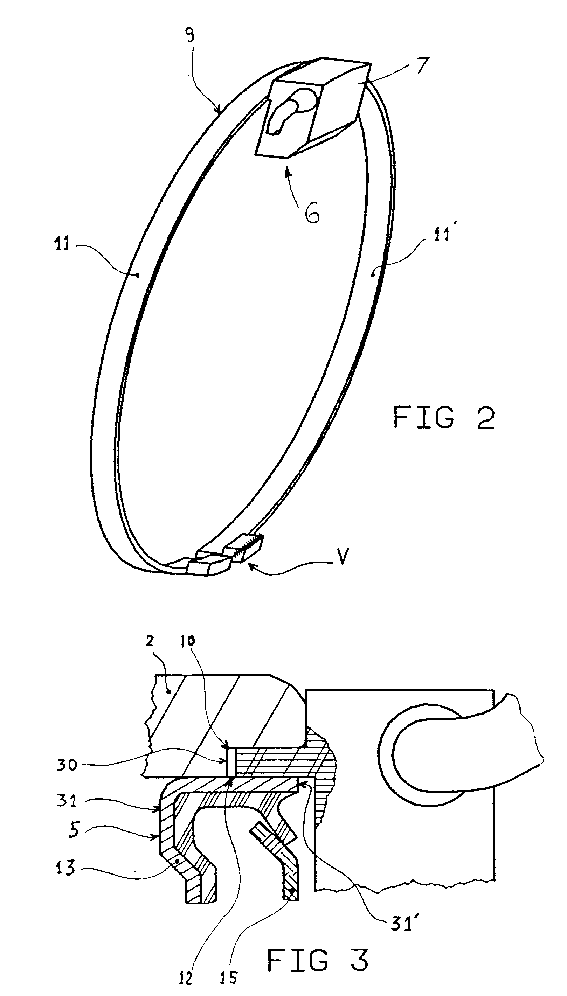

Ainsi que cela est représenté à la figure 1 le moyen capteur 6 est monté par son collier 9 dans un lamage 10 de la bague fixe 2. Le collier de fixation 9 est constitué par deux branches élastiques 11, 11′ représentées à la figure 2 dont l'épaisseur est égale à la différence des rayons du lamage 10 et de celui de la surface de portée 12 de la garniture d'étanchéité 5. Le diamètre intérieur des branches 11, 11′ est ainsi sensiblement égal de celui de la portée 12 et elles s'emboitent sur l'armature 13 de la garniture d'étanchéité 5. Le support 7 et la garniture 5 constituent de la sorte une unité préassemblée.

Ainsi que cela est représenté à la figure 3, le fond 30 du lamage 10 est situé approximativement à mi-distance des faces opposées 31, 31′ de la garniture d'étanchéité 5, définies par les plans de l'armature 13 et d'un déflecteur 15 de celle-ci. La portée de montage de l'armature 13 dans la bague fixe 2 est de la sorte maximale. De manière analogue un lamage 10′ pourra être usiné sur la face opposée de la bague 2 dans le but d'offrir une autre possibilité de montage du support 7 sans modification des conditions d'étanchéité du roulement.

Les lèvres d'étanchéité sont en contact frottant avec le déflecteur 15 tournant remplissant la fonction moyen codeur monté sur la bague intérieure tournante 1. Ainsi que cela apparaît au dessin le moyen capteur peut être aisément monté ou démonté sans perturber l'étanchéité du roulement.

Sa fixation sur la bague fixe 2 ou sur la garniture d'étanchéité 5 peut être assurée par un moyen de serrage additionnel tel qu'une vis "V" représentée à la figure 2.

Le déflecteur 15 est par contre recouvert ou réalisé en un matériau magnétique pouvant être aimanté afin de constituer un aimant multipolaire ainsi que cela est bien connu.

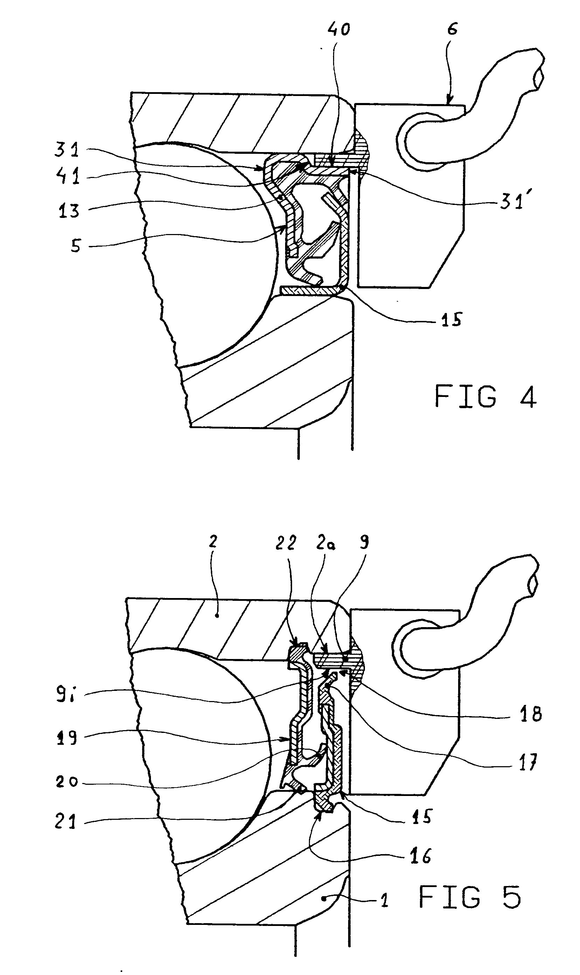

La figure 4 montre une variante de réalisation de la garniture d'étanchéité 5. Le moyen capteur 6 est monté par ses branches élastiques 11, 11′ sur une portée 40 de l'armature 13 limitée par un épaulement 41 situé approximativement à mi-distance des faces opposées 31, 31′ de la garniture d'étanchéité 5, définies par les plans de l'armature 13 et du déflecteur 15.

La figure 5 représente une autre variante de réalisation de la garniture d'étanchéité à deux joints d'étanchéité suivant laquelle le déflecteur 15 est réalisé sous la forme d'un premier joint d'étanchéité encastré dans une gorge 16 de la bague intérieure 1. Le déflecteur 15 porte une lèvre d'étanchéité 17 séparée du collier de fixation 9 par une perte de charge 18. Le deuxième joint d'étanchéité 19 possède une lèvre axiale 20 en contact frottant sur le déflecteur 15 et une lèvre radiale 21 en contact avec la bague intérieure 1. Le joint 19 est immobilisé dans une gorge 22 de la bague extérieure fixe 2.

Le diamètre extérieur des branches 11, 11' du collier de fixation est sensiblement égal au diamètre de la portée de montage 2a de la bague fixe 2.

Suivant cet exemple de réalisation la surface intérieure 9i du collier de fixation 9 coopère avec la lèvre d'étanchéité 17 et s'oppose à l'introduction d'impuretés dans la garniture au contact de la lèvre 20 au cours du fonctionnement du roulement.

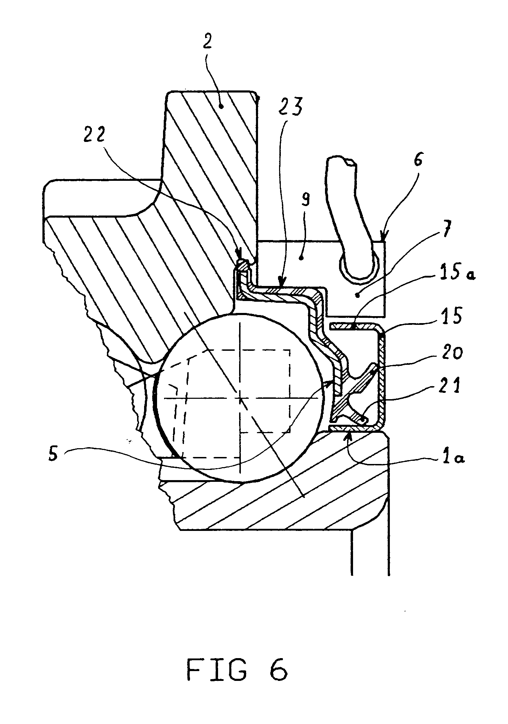

La figure 6 représente une variante de la garniture d'étanchéité 5 appliquée à un roulement à flasque de fixation. L'armature du joint d'étanchéité à lèvres axiale 20 et radiale 21 s'étend axialement à partir de la gorge de montage 22 sur la bague fixe 2, par une monture support 23 qui facilite le montage du collier de fixation 9 du moyen capteur 6. Le collier 9 prend ici appui sur la face de la bague 2. Le déflecteur 15 est monté sur une portée 1a de la bague intérieure pour envelopper par sa surface interne l'ensemble des lèvres 20, 21. A cet effet le déflecteur 15 possède une section en C orientée vers le plan médian du roulement dont la branche supérieure constitue une surface magnétisée 15a orientée vers le support 7 du moyen capteur 6.

## Revendications

1. Roulement à capteur d'informations dans lequel une bague fixe (2) porte un moyen capteur (6) et une bague tournante (1) porte un moyen codeur, des chemins de roulement de réception de corps roulants (3) au contact desdites bagues et au moins une garniture d'étanchéité (5) interposée entre ces mêmes bagues, caractérisé par le fait que le moyen capteur (6) est intégré à un support (7) axialement adjacent à la garniture d'étanchéité (5) et accolé à la face latérale de la bague fixe 2 et porte un collier de fixation (9) de diamètre sensiblement égal au diamètre extérieur d'un élément fixe de la garniture d'étanchéité.

2. Roulement selon la revendication 1, caractérisé par le fait que le diamètre intérieur de deux branches élastiques (11, 11′) du collier de fixation (9) est sensiblement égal à celui d'une portée de montage (12, 40) de la garniture d'étanchéité (5).

3. Roulement selon la revendication 1 ou 2, caractérisé par le fait que le collier de fixation (9) est monté dans la bague fixe (2) dans un logement (10) dont le fond est situé sensiblement à mi-distance des faces opposées (31, 31′) de la garniture d'étanchéité (5).

4. Roulement selon l'une quelconque des revendications 1 à 3, caractérisé par le fait qu'une portée (12, 40) de l'armature (13) de la garniture d'étanchéité est emboîtée entre les branches de (11, 11′) du collier de fixation (9) du moyen capteur (6).

5. Roulement selon l'une quelconque des revendications 1 à 4, caractérisé par le fait que le moyen capteur (6) et la garniture d'étanchéité (5) constituent une unité préassemblée.

6. Roulement selon l'une quelconque des revendications 1 à 5, caractérisé par le fait que l'armature de la garniture d'étanchéité (5) se prolonge axialement à partir d'une gorge de montage (22) sur la bague fixe (2) par une monture support (23) du collier de fixation (9) du moyen capteur.

7. Roulement selon l'une quelconque des revendications 1 et 2, caractérisé par le fait que la surface intérieure (9i) du collier de fixation (9) coopère avec une lèvre d'étanchéité (17) de la garniture (5).

## Patentansprüche

1. Wälzlager mit Meßaufnehmer, wobei ein feststehender Ring (2) einen Aufnehmer (6) trägt und ein sich drehender Ring (1) einen Codierer trägt und Wälzwege zur Aufnahme von mit diesen Ringen in Berührung stehenden Wälzkörpern vorgesehen sind sowie wenigstens eine Dichtungsanordnung (5) zwischen den Ringen, dadurch gekennzeichnet, daß der Aufnehmer (6) in einer Halterung (7) integriert ist in axialer Nachbarschaft zur Dichtungsanordnung (5) und angebaut an die Seitenwand des feststehenden Ringes (2) und versehen mit einer Befestigungsschelle (9), deren Durchmesser im wesentlichen gleich dem Außendurchmesser eines feststehenden Teils der Dichtungsanordnung ist.

2. Wälzlager nach Anspruch 1, dadurch gekennzeichnet, daß der Innendurchmesser der beiden elastischen Arme (11, 11′) der Befestigungsschelle (9) im wesentlichen gleich demjenigen einer Montageaussparung (12, 40) der Dichtungsanordnungn (5) ist.

3. Wälzlager nach Anspruch 1 oder 2, dadurch gekennzeichnet, daß die Befestigungsschelle (9) im feststehenden Ring (2) in einer Aussparung (10) angeordnet ist, deren Boden im wesentlichen gleich auf halbem Abstand der sich gegenüberliegenden Flächen (31, 31′) der Dichtungsanordnung (5) angeordnet ist.

4. Wälzlager nach einem der Ansprüche 1 bis 3, dadurch gekennzeichnet, daß eine Fläche (12, 40) der Anordnung (13) der Dichtungsanordnung zwischen den Armen (11, 11′) der Befestigungsschelle (9) des Meßaufnehmers (6) vorgesehen ist.

5. Wälzlager nach einem der Ansprüche 1 bis 4, dadurch gekennzeichnet, daß der Meßaufnehmer (6) und die Dichtungsanordnung (5) eine vormontierte Einheit bilden.

6. Wälzlager nach einem der Ansprüche 1 bis 5, dadurch gekennzeichnet, daß die Anordnung der Dichtungsanordnung (5) in axialer Richtung, ausgehend von einer Montagenut (22), am feststehenden Ring (2) durch eine Halterung (23) der Befestigungsschelle (9) des Meßaufnehmers verlängert ist.

7. Wälzlager nach einem der Ansprüche 1 und 2, dadurch gekennzeichnet, daß die Innenfläche (9i) der Befestigungsschelle (9) mit einer Dichtlippe (17) der Anordnung (5) zusammenwirkt.

## Claims

1. A rolling bearing with an information pick-up in which a fixed race (2) carries a pick-up means (6) and a rotary race (1) carries an encoder means, rolling tracks for receiving rolling bodies (3) in contact with said races and at least one sealing means (5) interposed between said races characterised in that the pick-up means (6) is integrated in a support (7) which is axially adjacent to the sealing means (5) and joined to the side face of the fixed race (2) and carries a fixing collar (9) of a diameter substantially equal to the outside diameter of a fixed element of the sealing means.

2. A rolling bearing according to claim 1 characterised in that the inside diameter of two elastic arms (11, 11′) of the fixing collar (9) is substantially equal to that of a mounting surface (12, 40) of the sealing means (5).

3. A rolling bearing according to claim 1 or claim 2 characterised in that the fixing collar (9) is mounted in the fixed race (2) in a housing (10) whose bottom is disposed substantially halfway between the opposite faces (31, 31′) of the sealing means (5).

4. A rolling bearing according to any one of claims 1 to 3 characterised in that a surface (12, 40) of the reinforcement (13) of the sealing means is engaged between the arms (11, 11′) of the fixing collar (9) of the pick-up means (6).

5. A rolling bearing according to any one of claims 1 to 4 characterised in that the pick-up means (6) and the sealing means (5) constitute a pre-assembled unit.

6. A rolling bearing according to any one of claims 1 to 5 characterised in that the reinforcement of the sealing means (5) is prolonged axially from a mounting groove (22) on the fixed race (2) by a support mounting (23) for the fixing collar (9) of the pick-up means.

7. A rolling bearing according to either one of claims 1 and 2 characterised in that the inside surface (9i) of the fixing collar (9) co-operates with a sealing lip (17) of the sealing means (5).
